# FASCICULE DE BREVET EUROPEEN

(11) **EP 0 594 497 B1**
(45) Date de publication et mention de la délivrance du brevet: **02.04.1997**
(21) Numéro de dépôt: 93402566.9
(22) Date de dépôt: 19.10.1993
(51) Int. Cl.: F01N 3/28, B01D 29/31

(54) **Module de filtration, de séparation, de purification de gaz ou de liquide, ou de transformation catalytique**
Modul für Filtration, Trennung, Reinigung von Gasen oder Flüssigkeiten oder katalytischer Umwandlung
Module for filtration, separation, gas or liquid purification or catalytic conversion

(30) Priorité: 20.10.1992 FR 9212535
(43) Date de publication de la demande: 27.04.1994
(73) Titulaire: SOCIETE DES CERAMIQUES TECHNIQUES, F-65460 Bazet (FR)
(72) Inventeur: Garcera, Daniel, F-65000 Tarbes (FR); Toujas, Edouard, F-65460 Bazet (FR); Gillot, Jacques, F-65310 Laloubère (FR)
(74) Mandataire: Schaub, Bernard

(56) Documents cités:
- FR-A- 2 392 709
- US-A- 3 841 839

## Description

La présente invention concerne un module de filtration, de séparation, de purification de gaz ou de liquide, ou de transformation catalytique, comportant, dans un carter, au moins un élément de traitement rigide pour la purification ou à membrane de séparation, de filtration, ou de transformation catalytique. Un tel module peut être destiné à la filtration, à la séparation, ou à la purification des liquides, mais il s'applique tout particulièrement à la filtration ou à la purification des gaz utilisés par exemple dans la fabrication des semi-conducteurs.

Ce type de module comprend:
- une enveloppe métallique, ou carter, généralement cylindrique, comportant une ou plusieurs pièces assemblées par soudage;
- un ou plusieurs éléments de traitement rigides, de géométrie tubulaire ou du type multicanal telle que décrite dans le brevet US-4,069,157, ou encore du type nid d'abeille tel que décrit dans le brevet US-4,781,831 .

Pour les applications de filtration ou purification des gaz destinés notamment à la fabrication des semi-conducteurs, l'ensemble du module doit pouvoir résister:
- aux contraintes thermiques liées à l'utilisation (cyclage thermique et dégazage par exemple),
- aux contraintes mécaniques de tenue en pression, comme par exemple pour le traitement d'un gaz pouvant être à plusieurs centaines de bars
- à la corrosion par le fluide traité, qui peut être par exemple HC1, un chlorure, un bromure ou un autre gaz corrosif utilisé en production, et en particulier pour la gravure des circuits intégrés.

De plus les exigences d'ultra-propreté de l'industrie électronique notamment imposent qu'il n'y ait aucun risque de relargage de particules polluantes par le module.

Un tel module doit pouvoir fonctionner à des températures allant de la température ambiante à plusieurs centaines de degrés Celsius, soit pour le traitement du fluide, soit pour le nettoyage ou la régénération du ou des éléments de traitement. Sous l'effet des variations de température, il apparait des différences de dilatation entre l'élément et le carter qui peuvent atteindre plusieurs millimètres quand l'élément de traitement a une longueur de l'ordre du mètre. La liaison élément-carter doit être assez flexible pour pouvoir se déformer de manière à compenser ces écarts de dilatation.

Dans certains montages connus, la liaison élément-carter peut être réalisée par l'intermédiaire d'un joint polymérique ou élastomérique, par exemple en PTFE, EPDM, silicone, etc... Dans ce cas, on utilise l'élasticité du joint pour compenser les écarts de dilatation entre l'élément et le carter.

Cette solution ne convient pas pour les utilisations à haute température, pour des raisons évidentes de dégradation physico-chimique et mécanique du polymère ou de l'élastomère. De plus avec le temps, ces composés vieillissent et fluent.

Par ailleurs, on connaît des modules dans lesquels la liaison du ou des éléments avec le carter se fait par l'intermédiaire d'une ou plusieurs pièces métalliques, ou viroles, placées aux extrémités de l'élément. Chacune de ces pièces est solidement fixée d'une part à l'enveloppe métallique, d'autre part à l'extrémité d'un élément de traitement par une brasure ou par un verre (ou émail). Ces solutions présentent des inconvénients majeurs.

D'une part, les brasures n'offrent pas en général une bonne résistance à la corrosion par des gaz tels que HC1, chlorures, bromures, etc..., qui sont couramment utilisés pour la gravure des circuits intégrés.

D'autre part, les verres qui ont une bonne résistance à la corrosion sont d'une manière générale ceux qui ne comprennent pas dans leur composition de composant fusible à basse température. Ces verres fondent donc à haute température. L'assemblage du module au moyen de ces verres nécessite donc de porter l'ensemble du module à haute température, ce qui n'est pas toujours possible car on risque d'endommager l'élément de traitement (couche filtrante, catalyseur, etc), ou le métal de la virole. De plus, pour obtenir une bonne liaison entre le verre et le métal du carter ou de la virole, il est en général nécessaire d'oxyder au préalable la surface métallique, ce qui n'est pas compatible avec les exigences d'ultra-propreté imposées par exemple dans les applications à la fabrication des semi-conducteurs. Enfin, cette solution verre est coûteuse, car elle met en jeu des moyens de cuisson importants et un procédé complexe.

On connaît un convertisseur catalytique pour le traitement des gaz d'échappement des véhicules à moteur comprenant un élément multicanal (US-3,841,839). La surface latérale externe de l'élément porte une collerette de part et d'autre de laquelle viennent s'appliquer des entonnoirs métalliques. Un boîtier soudé sur la partie la plus large des entonnoirs les maintient en place. Le brevet français FR-78 15737 décrit un appareil catalytique pour le traitement des gaz comportant un élément catalytique placé dans un boîtier. L'élément catalytique est immobilisé au moyen d'anneaux métalliques exerçant une compression longitudinale sur un matériau élastique placé entre l'élément catalytique et le boîtier. Ces dispositifs ne permettent pas le traitement d'un fluide par filtration.

Le but de l'invention consiste à réaliser un module de filtration utilisable à température élevée sans risque de pollution, et capable de résister aux contraintes d'ordre thermique, mécanique, et chimique qui lui sont appliquées.

L'objet de la présente invention est un module de filtration, de séparation, de purification de fluide, ou de transformation catalytique, comprenant:
- une enveloppe métallique, ou carter, sensiblement cylindrique,
- au moins un élément de traitement rigide constitué d'un matériau dense ou poreux choisi parmi la céramique, le carbone, le verre fritté, et un métal fritté, dont au moins une des extrémités est sensiblement cylindrique, et dont l'axe est parallèle à celui de l'enveloppe,
- un volume limité par la paroi interne dudit carter et la paroi externe dudit élément de traitement,
- au moins une pièce métallique en forme de virole élastiquement déformable, d'une part fixée au carter, et d'autre part reliée à ladite extrémité dudit élément, module caractérisé en ce que la liaison entre ladite virole et ladite extrémité dudit élément est un frettage thermique ou mécanique et en ce que ledit fluide circule dans ledit volume limité par la paroi interne du carter et la paroi externe de l'élément de traitement.

La virole peut être frettée sur l'extrémité ou l'inverse (frettage inverse). Le frettage consiste à réaliser l'emmanchement d'une pièce dans une frette, le diamètre intérieur de la frette étant inférieur au diamètre extérieur de la pièce à fretter d'une quantité appelée serrage. Ce mode de liaison par frettage, ou serrage, a l'avantage d'être exempt de tout agent de liaison organique ou inorganique.

Le frettage thermique consiste par exemple à emmancher l'élément dans la virole après dilatation de celle-ci par chauffage. Le frettage mécanique, ou emmanchement en force, consiste par exemple à enfoncer à froid l'élément dans la virole à l'aide d'une presse.

L'avantage du frettage thermique de l'élément dans la virole est qu'il y a serrage tant que la température d'utilisation du module reste en dessous de la température de relaxation du métal (c'est à dire la température en-dessous de laquelle il reste élastique) et de la température (s'il y en a une) à laquelle la dilatation thermique du métal et de l'extrémité de l'élément annulerait le serrage. La virole exerce une force de serrage radiale sur une surface sensiblement cylindrique de l'élément. Cette force de serrage est si élevéequ'aucun mouvement relatif de la virole sur l'élément n'est possible. L'intensité de la force est reliée à la largeur de la surface cylindrique. La force de serrage radiale peut être réglée en modifiant la largeur de la surface de contact entre la virole et l'élément de traitement: plus la bande de contact est large, plus le serrage est intense, sans que cela modifie la flexibilité longitudinale de la virole.

La liaison entre la virole et l'élément ne permet aucun mouvement relatif de la virole par rapport à l'élément. En effet tout mouvement de frottement génère des particules. Or l'un des but de l'invention est de pouvoir utiliser le module pour le traitement de fluides ultra-purs sans que des impuretés soient introduites, en particulier par la génération de particules.

Selon une variante, la liaison entre ledit élément et ladite virole est réalisée par frettage mécanique, ou emmanchement en force, de cônes Morse. L'élément actif dont la géométrie de l'extrémité est faiblement conique, du type cône Morse (conicité ≤5%), est relié à la virole dont le façonnage est de même géométrie.

De préférence, ladite virole est déformable de façon élastique, de telle sorte qu'elle peut se déformer légèrement parallèlement à l'axe longitudinal du module en se comportant comme un soufflet métallique. Dans le cas où l'élément de traitement est constitué d'un matériau à comportement mécanique fragile (céramique, verre, carbone,...), le montage avec la virole en forme de soufflet protège par son élasticité l'élément contre les chocs éventuels reçus par le carter.

Ladite virole est fabriquée dans un matériau choisi parmi un acier inoxydable, un alliage de titane du type TA6V de la société PECHINEY, un alliage riche en nickel tel que le N42 ou le Dilver (P0 ou P1) de la société IMPHY, ou le Kovar de la société WESTINGHOUSE, ou bien encore un alliage connu sous la marque déposée "HASTELLOY". Ces alliages sont choisis en raison de leur coefficient de dilatation, de leur température élevée de relaxation des contraintes, et de leur résistance à la corrosion.

Selon un premier mode de réalisation, ladite virole est fixée sur ledit carter par une soudure réalisée par emboîtement du bord externe de ladite virole dans un logement usiné dans la paroi dudit carter, et fusion partielle de l'épaisseur de la paroi dudit carter et du bord externe de ladite virole sans qu'il apparaisse de zone de métal fondu à la surface interne dudit carter.

De préférence, la virole et la ou les pièces du carter sont assemblées par soudage T.I.G. (Tungsten Inert Gas). L'électrode de tungstène et l'ensemble des pièces à souder sont animées l'un par rapport à l'autre d'un mouvement de rotation autour de l'axe du carter à assembler, ce qui permet de maîtriser la profondeur de la zone fondue (de l'ordre de 4mm) par rapport à l'épaisseur de la paroi (5 à 7mm). On obtient un cordon de soudure large (0,5mm environ).

Selon un second mode de réalisation, ladite virole est fixée sur ledit carter par une soudure réalisée par emboîtement du bord externe de ladite virole dans un logement usiné dans la paroi dudit carter, et fusion partielle de l'épaisseur de la paroi dudit carter sans fusion du bord externe de ladite virole mais avec pincement dudit bord par retrait de la zone fondue, et sans qu'il apparaisse de zone de métal fondu à la surface interne dudit carter.

Le pincement par le retrait de la soudure assure entre le carter et la virole une liaison qui est à la fois mécaniquement très solide et absolument étanche.

Ce procédé présente l'avantage que pour assembler le module, il suffit de deux soudures s'il y a deux viroles, ou d'une seule soudure s'il n'y a qu'une seule virole.

Un avantage du module selon la présente invention est que son assemblage est conçu de telle sorte que les liaisons réalisée soient étanches. Il s'agit de la liaison entre la virole et le carter, mais également de la liaison entre la virole et l'élément (ou son embout) dont l'étanchéité est assurée par les tolérances étroites des dimensions des pièces ainsi que par la faible rugosité de leur surface.

La liaison entre la virole et le carter pourrait aussi être réalisée par dudgeonnage, ou bien par frettage du carter sur la virole.

Selon une variante, au moins une des extrémités dudit élément est relié à ladite virole par l'intermédiaire d'un embout fixé sur ledit élément, ledit embout étant de forme sensiblement cylindrique et constitué d'un matériau choisi selon la fonction dudit embout, parmi un matériau poreux et un matériau dense.

La présence d'un embout est nécessaire dans les cas suivants:
- lorsque l'extrémité de l'élément de traitement ne peut pas être mise directement en communication avec l'orifice de sortie du module: soit parce qu'on souhaite boucher totalement l'élément par un embout plein, soit parce que l'élément doit être partiellement obturé afin de créer un passage préférentiel du fluide à travers les parois latérales et on utilise par exemple un embout microporeux, soit encore pour adapter la géométrie intérieure de l'élément afin de faire communiquer les canaux internes avec l'un des orifices d'entrée ou de sortie du module à l'aide d'un embout tubulaire;
- lorsque les caractéristiques mécaniques de l'élément sont insuffisantes pour la réalisation d'un frettage: l'embout est alors constitué d'un matériau dense ou poreux, de même nature ou différent de celui de l'élément, possédant une tenue mécanique suffisante pour permettre le frettage;
- lorsque la géométrie extérieure de l'élément n'est pas compatible avec l'opération de frettage: dans ce cas l'embout doit présenter une portée cylindrique ou faiblement conique correspondant à la géométrie de la virole.

L'embout est fixé sur l'élément de traitement soit par une liaison dépourvue de tout liant (frettage thermique, emmanchement en force, dudgeonnage,...), soit à l'aide d'un verre, ou émail, fusible à haute température. Dans ce cas l'utilisation d'un verre est possible sans endommager l'élément car la liaison entre l'élément et l'embout est en général réalisée avant le revêtement du support de l'élément par une membrane ou un matériau catalytique par exemple. Seul le verre haute température possède des propriétés qui le rendent utilisable à température élevée sans risque de pollution, et capable de résister aux contraintes d'ordre thermique, mécanique, et chimique qui sont appliquées au module.

Selon un perfectionnement, ledit élément contient des composés pouvant réagir chimiquement avec certains constituants (par exemple des impuretés) du fluide à traiter pour les fixer, ou les dénaturer.

Selon un premier mode de réalisation, ledit module comporte un élément de traitement multicanal à membrane du type stérilisant, à surface hydrophobe, et dont le diamètre moyen des pores est inférieur ou égal à 0,8 micromètre.

Selon un second mode de réalisation, ledit module comporte un élément de traitement constitué d'un matériau poreux, portant à chaque extrémité un embout en matériau dense constitué d'un matériau de même nature que ledit élément, ledit embout étant lié par frettage à une virole en alliage choisi parmi les alliages riches en nickel, et ladite virole étant soudée audit carter en acier inoxydable dont l'intérieur est électropoli.

Selon un troisième mode de réalisation, ledit module comporte un élément de traitement, choisi parmi le type nid d'abeille ou le type multicanal, en matériau dense dont les parois sont revêtues d'un matériau catalytique.

Un module suivant la présente invention a l'avantage de pouvoir être utilisé dans une large gamme de température, et en particulier à des températures élevées (plusieurs centaines de degrés Celsius), avec ou sans cyclage thermique. Il a également l'avantage d'être exempt de tout agent de liaison organique ou inorganique, susceptible de se dégrader au cours du temps ou sous l'effet des contraintes thermiques, mécaniques, ou chimiques induites par les conditions d'utilisation.

Enfin un autre avantage du module selon la présente invention est que sa surface intérieure est dépourvue de matériau susceptible de fixer puis de restituer des impuretés gênantes, telles que des matières organiques, de la vapeur d'eau, ou des micro-particules solides pouvant être éventuellement contenues dans le gaz à traiter. Cet avantage se révèle particulièrement précieux dans les applications où le module doit traiter des gaz très purs.

Un module selon l'invention est susceptible de nombreuses applications dans l'industrie électronique, chimique, pharmaceutique, et agro-alimentaire.

D'autres caractéristiques et avantages de la présente invention apparaîtront au cours de la description suivante et à la lecture des exemples, donnés à titre illustratif mais nullement limitatif, et dans le dessin annexé.

Dans le dessin annexé:
- la figure 1 représente de manière schématique un module selon l'invention;
- la figure 2 est un agrandissement de la jonction carter-virole-élément du module représenté sur la figure 1;
- la figure 3 montre le positionnement de la virole et des pièces du carter du module de la figure 1 avant soudage;
- la figure 4 montre les mêmes pièces que la figure 3 après soudage;
- la figure 5, analogue à la figure 4, représente une variante de la soudure de la liaison carter-virole de la figure 3 après soudage;
- les figures 6 et 7, analogues à la figure 2, montrent deux variantes de la jonction carter-virole-élément;
- la figure 8 représente une variante de réalisation d'un module de séparation selon l'invention utilisant le principe de la filtration tangentielle;
- la figure 9 montre une variante de la liaison carter-virole-élément de la figure 8;
- les figure 10 et 11 représentent deux variantes de réalisation d'un module de purification des gaz selon l'invention dans le cas où l'élément de traitement comporte un composé réactif;
- la figure 12A est une vue agrandie d'une jonction virole-élément dans le cas où il y a deux viroles;
- la figure 12B est une vue agrandie de la même jonction virole-élément dans le cas où il n'y a qu'une seule virole;
- la figure 13A représente une liaison virole-élément par frettage inverse;
- la figure 13B représente une autre variante d'une liaison virole-élément par frettage inverse;
- la figure 14 montre schématiquement une liaison virole-élément par emmanchement en force de cônes Morse;

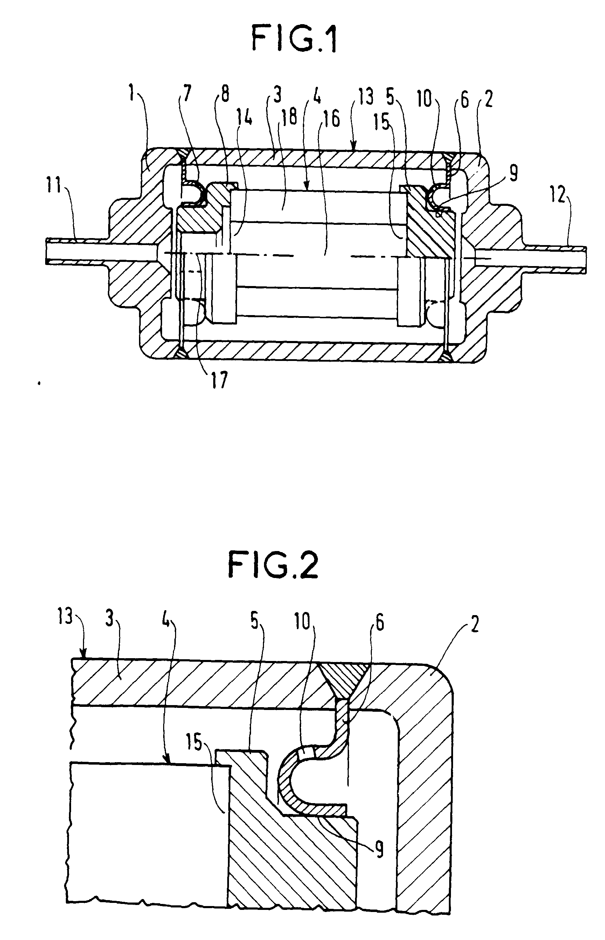

Un module de filtration à élément rigide selon l'invention est représenté sur la figure 1; il comporte:
- un carter cylindrique 13, composé de plusieurs pièces 1, 2, et 3, assemblées par soudage;
- un élément de traitement 4, de géométrie tubulaire, présentant un canal intérieur 16 limité par une paroi poreuse 18. Les extrémités 14 et 15 de l'élément sont munies d'embouts 5 et 8 comportant une portée cylindrique 9; l'embout 5 est plein et bouche le canal intérieur 16 de l'élément 4, alors que l'embout 8 possède un orifice 17 dans l'axe du canal intérieur 16;
- deux pièces métalliques 6 et 7, ou viroles, chacune de ces pièces étant solidement fixée selon l'invention d'une part par frettage aux embouts 5 et 8 de l'élément de traitement et d'autre part par soudage au carter 13. L'une des deux viroles 6 comporte un orifice 10 permettant le passage du fluide.

L'entrée et la sortie du fluide à traiter se font par des orifices 11 et 12 situés dans l'axe du canal 16, à chaque extrémité du module.

Dans ce type de module, le passage du fluide à traiter se fait de la surface latérale extérieure de l'élément de traitement 4 vers la surface intérieure du canal 16. La circulation du fluide a lieu de la manière suivante: entrée du fluide par l'orifice 12 à l'extrémité du module, passage par l'orifice 10 dans la virole 6, circulation le long de la surface latérale extérieure de l'élément 4, traversée de la paroi 18 de l'élément 4, circulation dans le canal intérieur 16 vers l'extrémité 14 de l'élément 4, et sortie par l'orifice 17 puis l'orifice 11 à l'autre extrémité du module.

La figure 2 est un agrandissement de la liaison carter-virole-élément de traitement de la figure 1. L'élément de traitement 4 comprend une partie centrale active qui porte, à son extrémité 15, l'embout 5. La virole 6 vient serrer par frettage la portée cylindrique 9 située sur l'embout 5. La jonction virole-carter est située sur la surface latérale du carter 13, à la jonction des pièces 2 et 3.

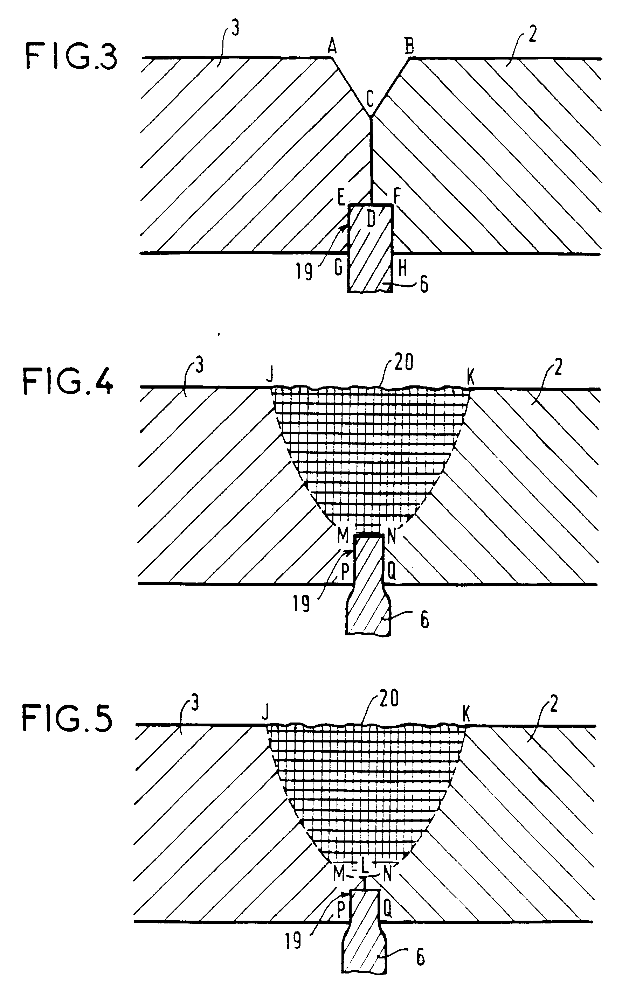

On réalise la fixation de la virole 6 sur le carter 13 de la manière suivante (voir figures 3 et 4). Un logement 19 est usiné dans les pièces 2 et 3 du carter 13 de façon à ce que le bord externe GEFH de la virole 6 s'y emboîte exactement comme le montre la figure 3, qui représente les pièces avant soudage.

Ainsi qu'il est visible sur la figure 4, le soudage est réalisé par l'extérieur de manière à fondre une partie seulement de l'épaisseur des pièces 2 et 3 du carter 13 et à fondre uniquement le bord externe EF de la virole 6; la zone fondue est représentée en JMNK.

La solidification de la zone fondue se fait avec un retrait qui pince fortement le rebord de la virole 6, l'épaisseur MN, ou PQ, devenant alors nettement plus faible que l'épaisseur initiale EF, ou GH, de la virole 6. Le pincement par le retrait de la soudure assure entre le carter 13 et la virole 6 une liaison qui est à la fois mécaniquement très solide et absolument étanche.

La liaison virole-carter est réalisée de telle sorte qu'il n'apparaît pas de surface libre 20 de métal en fusion à l'intérieur du carter 13 pendant l'opération de soudage. Cette méthode présente l'avantage d'empêcher d'une part l'émission de particules de métal pendant cette opération et le relargage ultérieur de particules piégées, d'autre part la modification de l'état de surface autour de la zone de soudure par condensation de métal vaporisé pendant l'opération; enfin cette méthode permet de limiter la zone fondue à la partie externe de l'épaisseur de la paroi du carter 13, soit environ 4mm pour une épaisseur totale de paroi de 5 à 7mm.

Dans le cas où la surface intérieure du carter 13 doit présenter des caractéristiques particulières (surface électropolie, passivée, chromée, etc...), on peut réaliser ces traitements sur les pièces avant soudage. Après soudage, la totalité de la surface intérieure du carter 13 présentera encore ces caractéristiques, alors que les carters des modules connus, qui sont assemblés suivant d'autres procédés ne comportant pas cette virole 6, ont sur leur surface intérieure une bande de métal fondu puis resolidifié. A l'exception de l'élément de traitement 4, tous les autres composants du module peuvent être réalisés de façon à ce que toute la surface intérieure du module soit polie, et pour les parties métalliques électropolie, pour ne pas relarguer de particules solides, ou encore passivée pour résister à la corrosion.

Selon un mode de réalisation de ce module:
- le carter 13 est en acier inoxydable 316L électropoli à l'intérieur;
- l'élément de traitement 4 monotube est du type filtre à gaz, d'une longueur de 2 à 20cm, en céramique (alumine Al₂O₃) revêtue d'une couche d'alumine de diamètre moyen de pores de 0,1µm (Membralox P19-40 de SCT), et comporte à chaque extrémité un embout 5 et 8 en alumine dense collé au moyen d'un verre;
- chaque virole 6 et 7 en forme de soufflet, est composée d'un alliage comportant 41% de nickel et 59% de fer (N42 de la société IMPHY), et soudée sur le carter 13 suivant la variante représentée figure 2.

Les principales caractéristiques sont:
* diamètre externe de la portée cylindrique de l'embout en céramique: 22,084mm ± 0,002mm
* coefficient de dilatation de l'alumine: 7.10⁻⁶/°C
* rugosité de surface de la céramique sur la surface de portée cylindrique: Ra = 1,1 à 1,3µm (Ra écart moyen arithmétique des aspérités)
* largeur de la portée cylindrique: 3mm
* température d'assemblage de l'embout en alumine: 20°C
* diamètre interne à froid avant assemblage de la portée cylindrique de la virole en N42: 22,050mm ± 0,003mm
* diamètre interne à chaud au moment de l'assemblage de la virole en N42: 22,090mm
* rugosité de surface de la portée cylindrique de la virole: Ra = 1,75µm
* coefficient de dilatation de l'alliage N42: 5.10⁻⁶/°C
* température de relaxation des contraintes de l'alliage N42: supérieure à 500°C
* température d'assemblage de la virole: 350°C
* température de fonctionnement du module: environ 450°C
* diamètre interne de la partie cylindrique du carter: 43mm
* diamètre externe de la partie cylindrique du carter: 53mm
* diamètre externe de la virole avant soudage: 44,6mm

Les pièces 2 et 3 du carter 13 et la virole 6 sont assemblées en vue du soudage comme le montre la figure 3, avec GE=HF=0,8mm et EF=GH=0,45mm. Après soudage (figure 4), ces valeurs deviennent PM=QN=0,6mm et MN=PQ=0,37mm.

Le module a été soumis à des tests d'évaluation dont les résultats sont les suivants:
* force d'arrachement à 20°C de la virole par rapport à l'embout: 3700 Newtons
* test de fuite à l'air: l'intérieur du carter étant sous vide, le module est soumis à un cyclage thermique de 50 cycles entre 20°C et 400°C; on obtient:
   - avant cyclage thermique: 5.10⁻⁶atm.cm³.s⁻¹
   - après cyclage thermique: 6.10⁻⁷atm.cm³.s⁻¹ cette différence entre les valeurs de fuite avant et après cyclage thermique n'est pas significative.
* test de rétention de particules, cette mesure est faite au compteur de particules à noyau de condensation (CNC type 3022 de la société TSI): pas de passage de particules supérieures à 0,01µm pendant un test d'une durée de 5 minutes, avec un débit d'air dans le filtre de 9 cm³/seconde.

Un module selon l'invention tel que représenté sur la figure 1 peut être utilisé pour réaliser:
- des filtres pour les gaz, en particulier pour les gaz corrosifs, ou pour les liquides utilisés pour la fabrication des semi-conducteurs, notamment des circuits intégrés;
- des purificateurs de gaz ou de liquides;
- des séparateurs, des purificateurs ou des filtres à gaz de plus grande dimension, comportant plusieurs éléments d'une longueur de l'ordre du mètre;
- des évents de fermenteur permettant une communication étanche aux micro-organismes entre le gaz situé au-dessus du liquide dans le fermenteur, et l'atmosphère extérieure. Dans ce cas, l'élément actif est du type multicanal et la membrane doit être du type stérilisant (diamètre moyen des pores ≤0,8µm); elle doit être de préférence à surface hydrophobe pour éviter que la vapeur d'eau en s'y condensant bloque le passage du gaz;
- des dispositifs poreux contenant des agents chimiques ou des catalyseurs fixés dans la porosité, et destinés à traiter des gaz ou des liquides qui traversent cette porosité en réagissant avec ces éléments chimiques ou ces catalyseurs, en particulier pour purifier ces gaz ou ces liquides.

Ces filtres ou ces éléments poreux peuvent être du type à membrane, c'est-à-dire composés d'un support à porosité grossière et d'une ou plusieurs couches à porosité fine.

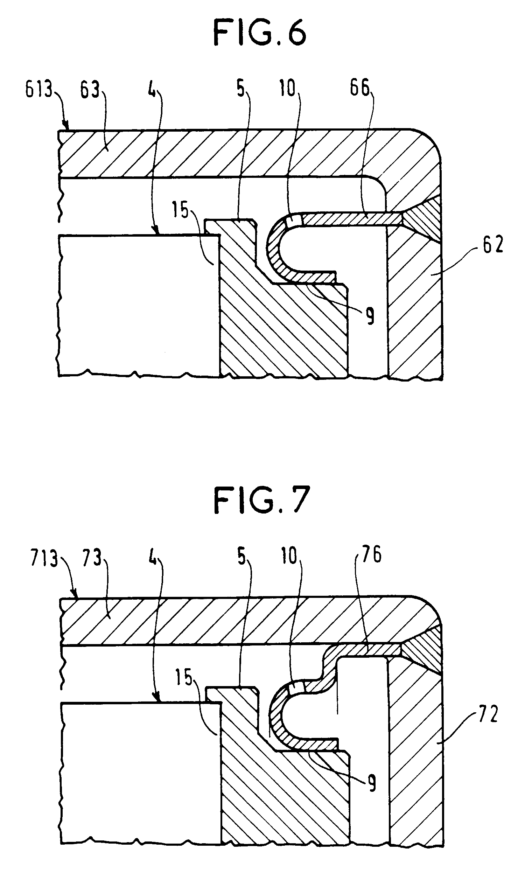

La figure 5 représente une autre variante de la liaison carter-virole. Le soudage est réalisé par l'extérieur de manière à fondre une partie seulement de l'épaisseur des pièces 2 et 3 du carter 13, sans qu'il y ait fusion du bord externe EF de la virole 6; la zone fondue est représentée en JKL. La virole est maintenue par le pincement dû au retrait de la zone fondue qui entraîne le resserrement du logement 19.

Sur les figures 6 et 7, on a représenté des variantes de la position de la jonction virole-carter.

Selon une première variante, la virole 66 est soudée sur la surface transversale du carter 613, à l'extrémité du module, à la jonction des pièces 62 et 63 (figure 6).

Selon une seconde variante, la virole 76 est soudée à l'intersection des surfaces transversale et latérale du carter 713, à la jonction des pièces 72 et 73 (figure 7).

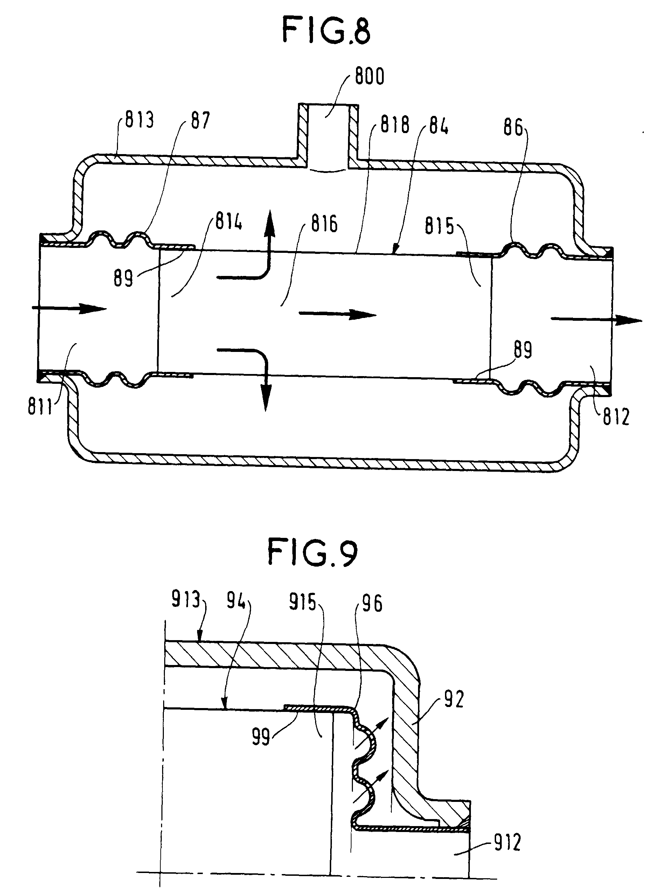

La figure 8 représente un module comportant un élément de traitement 84 muni d'un canal intérieur 816 limité par une paroi 818; chaque extrémité 814 et 815 est reliée respectivement à chacune des viroles 87 et 86. Le frettage des viroles 86 et 87 est effectué directement sur la portée cylindrique 89 de l'élément de traitement 84. Les viroles 86 et 87 sont d'autre part soudées sur la surface transversale du carter 813 au niveau des orifices d'entrée 811 et de sortie 812 dans l'axe du module. Par ailleurs, le carter 813 possède un deuxième orifice de sortie 800 placé sur sa face latérale.

Ce type de module fonctionne suivant le principe de la filtration tangentielle. Le fluide suit le chemin représenté sur la figure 8 par des flèches: le fluide à traiter entre dans le module par l'orifice 811 qui communique avec l'extrémité 814 de l'élément 84, et pénètre dans le canal intérieur 816 dont la surface est recouverte ou imprégnée d'une membrane de séparation. Il y a alors séparation du fluide en deux courants. Une fraction du fluide effectue le trajet suivant: circulation tangentielle à la surface interne du canal intérieur 816 de l'élément 84, traversée de la paroi 818 de l'élément 84 après échange avec la membrane, circulation le long de la surface latérale extérieure de l'élément 84, sortie par l'orifice 800 dans la paroi du carter 813. Une autre partie du fluide circule vers l'autre extrémité 815 de l'élément 84, et sort du module par l'orifice 812.

L'élément de traitement 84 est de type cylindrique en carbone poreux, revêtu d'une membrane microporeuse (diamètre moyen de pores: 1 nanomètre); ses extrémités 814 et 815 sont recouvertes de carbone vitrifié et reliées par frettage respectivement aux viroles 87 et 86. Les viroles 86 et 87, en forme de soufflet, sont en alliage de titane du type TA6V de PECHINEY avec addition de 6% d'aluminium et 4% de vanadium; ce matériau est choisi pour ses caractéristiques thermomécaniques et sa bonne résistance à la corrosion dans les milieux ne comportant pas de NaCl. Le carter 813 est de composition identique, ce qui résout le problème de corrosion et facilite l'assemblage virole-carter par soudure.

Les principales caractéristiques de chaque virole et de l'élément sont:
* diamètre externe sur la portée cylindrique en carbone vitreux de l'élément à 20°C: 32,000mm ± 0,003mm
* coefficient de dilatation du carbone: 5.10⁻⁶/°C
* rugosité de surface de la portée cylindrique en carbone vitreux rectifié: Ra = 0,2µm
* largeur de la portée cylindrique en carbone vitreux: 4mm
* température d'assemblage de l'extrémité en carbone vitreux: 20°C
* diamètre interne de la portée cylindrique de la virole en TA6V à 20°C: 31,930mm ± 0,003mm
* rugosité de surface de la portée cylindrique de la virole avant assemblage: Ra = 0,5µm
* coefficient de dilatation de l'alliage TA6V: 10.10⁻⁶/°C
* limite élastique: 900 MPa
* température de relaxation des contraintes: 730°C
* température d'assemblage de la virole: 270°C

Et les caractéristiques principales de cette liaison sont:
* force d'arrachement à 20°C de la liaison embout-virole: supérieure à 5000 Newtons
* température maximale d'utilisation: 400°C; au-dessus de cette valeur la contrainte de serrage devient insuffisante pour remplir les fonctions requises concernant l'étanchéité et la tenue mécanique.

Ce mode de liaison par frettage réalisé à une température relativement basse comparée à la température de frittage de la membrane, présente l'avantage de ne pas entraîner de modification des couches ou membranes dont est revêtu l'élément. De telles modifications peuvent se produire lorsqu'on utilise des procédés comme la projection de matière en fusion, du type schoopage métallique ou céramique, à cause du transfert de chaleur produit par la flamme.

Avec ce type de module, on peut réaliser des séparateurs à membrane destinés à séparer des gaz ou des liquides. Ce module est plus particulièrement applicable, suivant le principe de la filtration tangentielle, à l'extraction d'asphaltènes du fuel lourd ou des résidus dans des conditions supercritiques de température (environ 230°C) et de pression (environ 25 bars). Ce module peut être également utilisé pour la récupération de catalyseurs de cracking suivant le même principe de filtration tangentielle par un élément revêtu d'une membrane de 0,2µm. Les conditions de fonctionnement en température et pression sont sensiblement plus élevées que dans le cas précédent.

Sur la figure 9, on a représenté une variante de la liaison carter-virole-élément où l'assemblage est réalisé par une virole 96 frettée sur la portée cylindrique 99 à l'extrémité 915 de l'élément de traitement 94. Cette virole 96 est elle-même soudée sur la pièce 92, constituant la surface transversale du carter 913, au niveau de l'orifice 912 placé dans l'axe du module

Suivant d'autres variantes de la liaison représentée sur la figure 9 où la virole 96 est reliée au carter 913 sur la surface transversale au niveau de l'orifice 912, l'assemblage entre le carter et plusieurs éléments de traitement est réalisé par des viroles frettées sur des embouts portés par les extrémités des éléments, ces viroles étant elles-mêmes soudées ou dudgeonnées sur une plaque perforée servant de section transversale au carter. Cette liaison est applicable à des séparateurs, des purificateurs ou des filtres. à gaz de grande dimension, comportant plusieurs éléments d'une longueur de l'ordre du mètre.

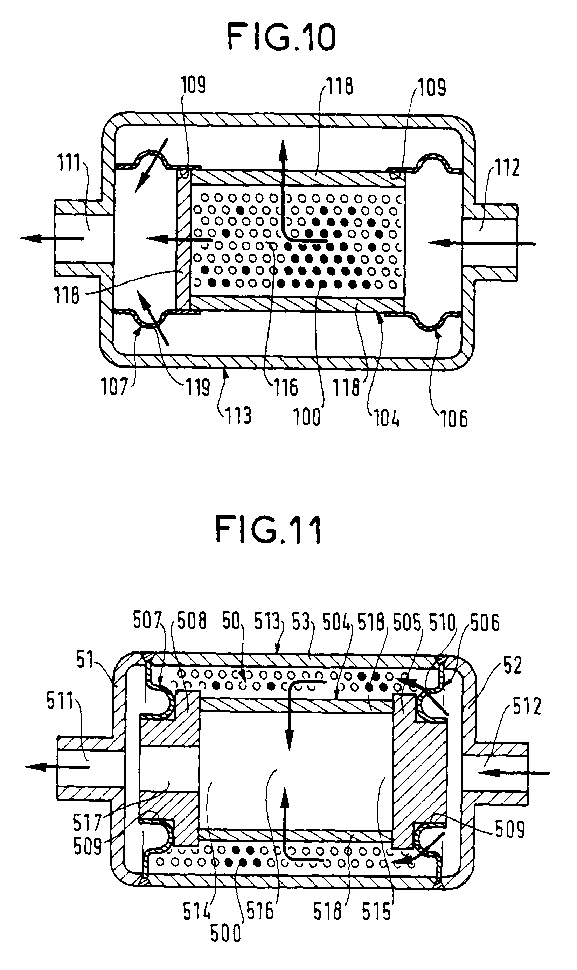

Sur la figure 10, on a représenté un purificateur de gaz comportant un élément tubulaire 104 à paroi poreuse 118 dont le canal intérieur 116 contient des constituants 100 qui réagissent chimiquement avec certaines impuretés du gaz pour les fixer ou les dénaturer. Chaque extrémité 114 et 115 de l'élément 104 comporte une portée cylindrique 109 sur laquelle sont fixées par frettage des viroles 107 et 106 en forme de soufflet en Hastelloy C22. La virole 107 possède un orifice 119 pour le passage du gaz. Ces viroles 106 et 107 sont elles-mêmes soudées au carter 113 constitué du même matériau C22. Dans l'axe du module se trouve un orifice d'entrée 112 et un orifice de sortie 111 du gaz. La circulation du gaz dans le module est représentée par des flèches.

Dans cette variante de conception d'un module selon l'invention, le gaz à traiter pénètre dans le module par l'orifice 112, balaye le milieu réactif 100 situé dans le canal interne 116 de l'élément 104, traverse la paroi poreuse 118 de l'élément 104, puis le gaz traité ressort du module par l'orifice 111, directement ou après avoir traversé la virole 107 par l'orifice 119.

Les principales caractéristiques de chaque virole et de l'élément sont:
* diamètre moyen de pores de l'élément: 12µm
* diamètre externe sur la portée cylindrique de l'élément: 32,000mm ± 0,003mm
* coefficient de dilatation de l'alumine: 7.10⁻⁶/°C
* rugosité de surface de la portée cylindrique: Ra = 0,8µm
* largeur de la portée cylindrique: 5mm
* température d'assemblage de l'élément en céramique: 20°C
* diamètre interne de la virole en Hastelloy C22 à 20°C: 31,910mm ± 0,003mm
* rugosité de surface de la portée cylindrique de la virole avant assemblage: Ra = 0,4µm
* coefficient de dilatation du C22: 14.10⁻⁶/°C
* température d'assemblage de la virole: 250°C
* température d'utilisation au-dessus de laquelle la contrainte de serrage devient insuffisante: 350°C

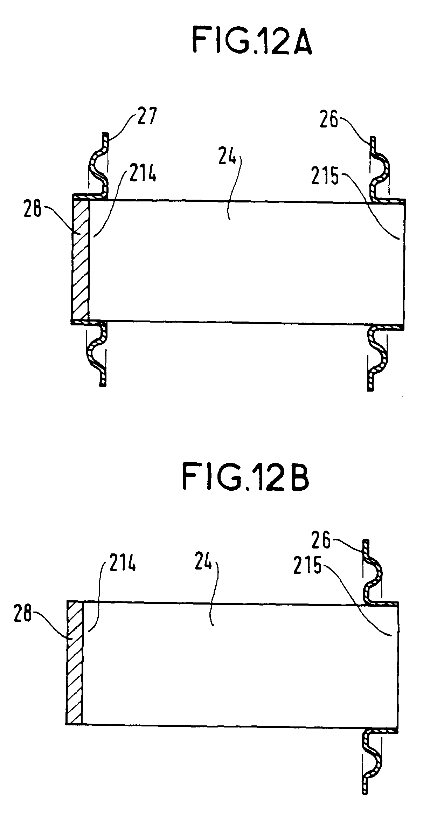

Un purificateur de gaz d'une conception différente est représenté sur la figure 11. Les constituants réactifs 500 se trouvent à l'extérieur de l'élément poreux 504 qui a la forme d'un cylindre creux ayant une paroi poreuse 518 et un canal intérieur 516. Chaque extrémité 514 et 515 de l'élément 504 est munie d'un embout 508 et 505. L'embout 505 sert de bouchon au canal 516, alors que l'embout 508 possède un orifice 517 mettant en communication le canal 516 avec l'orifice de sortie 511 placé dans l'axe du module. L'entrée dans le module s'effectue par l'orifice 512, placé également dans l'axe du module, à l'autre extrémité. Chaque embout 505 et 508 comporte une portée cylindrique 509 sur laquelle est frettée une virole 506 et 507. La virole 506 possède un orifice 510 permettant le passage du gaz. Les viroles 506 et 507 sont d'autre part soudées sur la surface transversale du carter 513 à la jonction des pièces 51 et 53 et des pièces 52 et 53.

Dans ce cas, le gaz à traiter pénètre par l'orifice 512 du module, traverse la virole 506 par l'orifice 510, balaye le milieu réactif 500 situé dans l'intervalle 50 séparant l'élément de traitement 504 du carter 513, traverse la paroi poreuse 518 de l'élément 504, circule dans le canal intérieur 516 de l'élément 504, et sort par l'orifice 517 de l'embout 508 qui communique avec l'orifice 511 de sortie du module.

L'élément de traitement 504 est en céramique poreuse, les embouts 505 et 508 sont en céramique dense, les viroles 506 et 507 sont en Hastelloy C22. Le carter 513 est constitué du même matériau que les viroles 506 et 507. Ce module comporte en outre un produit réactif 500 qui est composé de particules d'alumine recouvertes de platine se trouvant dans l'espace 50 situé entre l'élément 504 et le carter 513.

Les principales caractéristiques de chaque virole et de l'élément sont:
* diamètre externe sur la portée cylindrique de l'élément à 20°C: 20,000mm ± 0,003mm
* coefficient de dilatation de l'alumine: 7.10⁻⁶/°C
* rugosité de surface de la portée cylindrique en céramique: Ra = 0,15µm
* largeur de la portée cylindrique: 5mm
* température d'assemblage de l'embout en céramique: 20°C
* diamètre interne de la portée cylindrique de la virole à 20°C: 19,940mm ± 0,003mm
* rugosité de surface de la portée cylindrique de la virole avant assemblage: Ra = 0,25µm
* coefficient de dilatation du C22: 14.10⁻⁶/°C
* largeur de la portée cylindrique: 5mm
* température d'assemblage de la virole: 270°C

Les caractéristiques principales de cette liaison sont:
* force d'arrachement à 20°C de la liaison embout-virole: supérieure à 5000 Newtons
* température d'utilisation au-dessus de laquelle la contrainte de serrage devient insuffisante: 350°C

Un tel module de séparation utilisant une membrane poreuse de retenue d'un lit de catalyseur est utilisable dans le cas de réaction catalytique de gaz, comme l'hydrogénation du benzène qui s'effectue aux environs de 260°C, température à laquelle le taux de conversion est de l'ordre de 100%.

Les figures 12A et 12B montrent une vue agrandie d'une jonction virole-élément dans le cas d'un élément 24 dont une des extrémités 214 porte un embout 28.

Sur la figure 12A, l'élément 24 est relié à deux viroles 26 et 27, l'une des viroles 26 est frettée directement sur l'extrémité 215 de l'élément 24, l'autre virole 27 est frettée sur l'embout 28 porté par l'extrémité 214 de l'élément 24.

Sur la figure 12B, une seule virole 26 est frettée directement sur l'extrémité 215 de l'élément 24.

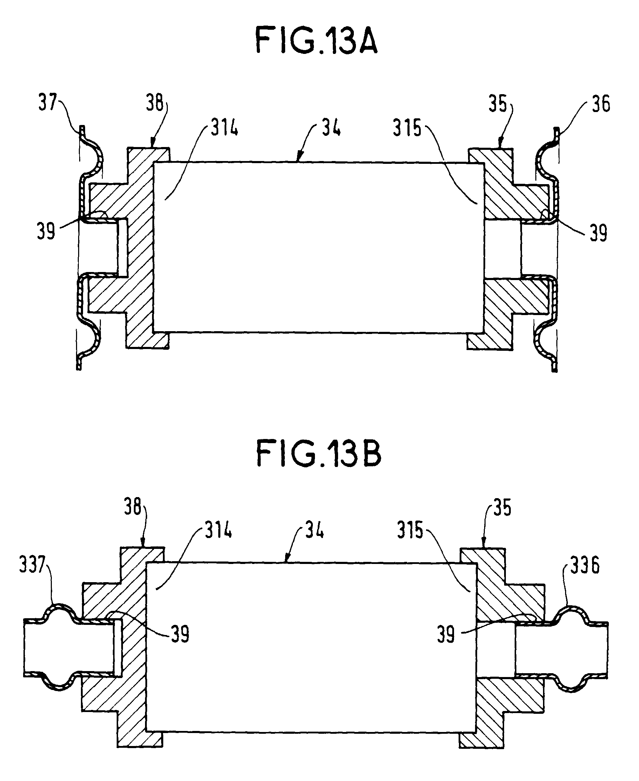

Les figures 13A et 13B représentent un type de liaison virole-élément par frettage inverse suivant deux variantes de réalisation.

Sur la figure 13A, des embouts 35 et 38, situés à chacune de ses extrémités 314 et 315 d'un élément 34, sont frettées sur la portée cylindrique 39 située sur chacune des viroles 36 et 37. Dans le frettage dit inverse, on réalise l'emmanchement d'une pièce, les viroles 36 et 37, dans une frette représentée ici par les embouts 35 et 38. Les viroles 36 et 37 sont d'autre part fixées suivant une direction perpendiculaire à l'axe de l'élément.

La figure 13B représente le frettage inverse de deux viroles 336 et 337 dans les embouts 35 et 38 possédant une portée cylindrique 39 placés aux extrémités 314 et 315 de l'élément 34 Les viroles 336 et 337 sont d'autre part fixées suivant une direction parallèle à l'axe de l'élément.

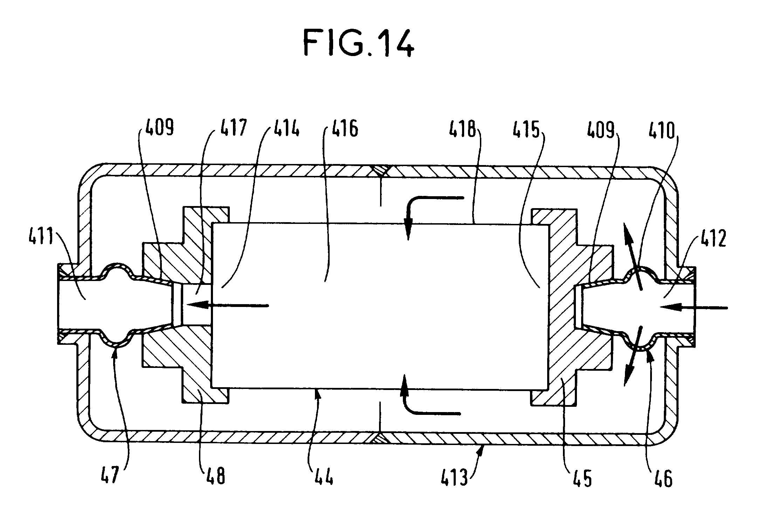

La figure 14 représente un module qui comporte un élément de traitement 44 tubulaire, possédant un canal intérieur 416 et une paroi poreuse 418, relié par frettage mécanique à des viroles 46 et 47 de forme légèrement conique. La virole 46 possède un orifice 410 permettant le passage du fluide. Les extrémités 414 et 415 de l'élément 44 sont munies chacune d'un embout 45 et 48 dont l'alésage est de même géométrie que les viroles 46 et 47. L'embout 45 sert de bouchon au canal intérieur 416 de l'élément 44, alors que l'embout 48 est muni d'un orifice 417 qui met en communication le canal intérieur 416 avec l'orifice 411 de sortie du module. Le frettage des embouts 45 et 48 sur la portée conique 409 des viroles 46 et 47 est réalisée par emmanchement en force de deux cônes, du type cônes Morse, c'est-à-dire avec un demi-angle au sommet d'environ 1,5 degré. Les viroles 45 et 48 sont d'autre part soudées sur le carter 413 au niveau des orifices d'entrée 412 et de sortie 411 situés dans l'axe du module.

Le fluide, dont la circulation est représentée par des flèches, entre par l'orifice 412, traverse la virole 46 par l'orifice 410, circule le long de la surface latérale extérieure de l'élément 44, traverse la paroi 418 et se dirige vers l'extrémité 414 en empruntant le canal intérieur 416, enfin, en passant par l'orifice 417 de l'embout 48, sort par l'orifice 411 à l'autre extrémité du module.

## Revendications

1. Module de filtration, de séparation, de purification de fluide, ou de transformation catalytique, comprenant:
- une enveloppe métallique (13), ou carter, sensiblement cylindrique,
- au moins un élément de traitement (4) rigide constitué d'un matériau dense ou poreux choisi parmi la céramique, le carbone, le verre fritté, et un métal fritté, dont au moins une des extrémités (5) est sensiblement cylindrique, et dont l'axe est parallèle à celui de l'enveloppe (13),
- un volume limité par la paroi interne dudit carter et la paroi externe dudit élément de traitement,
- au moins une pièce métallique en forme de virole (6) élastiquement déformable, d'une part fixée au carter (13), et d'autre part reliée à ladite extrémité (5) dudit élément (4),
module caractérisé en ce que la liaison entre ladite virole (6) et ladite extrémité (5) dudit élément (4) est un frettage thermique ou mécanique, et en ce que ledit fluide circule dans ledit volume limité par la paroi interne du carter et la paroi externe de l'élément de traitement.

2. Module selon la revendication 1, caractérisé en ce que ladite virole est fixée sur ledit carter par une soudure réalisée par emboîtement du bord externe de ladite virole dans un logement usiné dans la paroi dudit carter, et fusion partielle de l'épaisseur de la paroi dudit carter et du bord externe de ladite virole sans qu'il apparaisse de zone de métal fondu à la surface interne dudit carter.

3. Module selon la revendication 1, caractérisé en ce que ladite virole est fixée sur ledit carter par une soudure réalisée par emboîtement du bord externe de ladite virole dans un logement usiné dans la paroi dudit carter, et fusion partielle de l'épaisseur de la paroi dudit carter sans fusion du bord externe de ladite virole mais avec pincement dudit bord par retrait de la zone fondue, et sans qu'il apparaisse de zone de métal fondu à la surface interne dudit carter.

4. Module selon l'une des revendications précédentes, caractérisé en ce que ladite virole exerce une force de serrage radiale sur une surface sensiblement cylindrique dudit élément, l'intensité de ladite force étant reliée à la largeur de ladite surface.

5. Module selon l'une des revendications précédentes, caractérisé en ce que la liaison entre ladite virole et ledit élément ne permet aucun mouvement relatif de ladite virole par rapport audit élément.

6. Module selon l'une des revendications précédentes, caractérisé en ce que au moins une des extrémités dudit élément est relié à ladite virole par l'intermédiaire d'un embout fixé sur ledit élément, ledit embout étant de forme sensiblement cylindrique et constitué d'un matériau choisi parmi un matériau poreux et un matériau dense.

7. Module selon la revendication 6, caractérisé en ce que ledit embout est relié audit élément par un verre fusible à haute température.

8. Module selon l'une des revendications précédentes, caractérisé en ce que la liaison entre ladite virole et ledit élément est réalisée par frettage mécanique de cônes Morse.

9. Module selon l'une des revendications précédentes, caractérisé en ce que ladite virole est fabriquée dans un matériau choisi parmi un acier inoxydable, un alliage de titane, et un alliage riche en nickel.

10. Module selon l'une des revendications précédentes, caractérisé en ce que ledit élément contient des composés pouvant réagir chimiquement avec certains constituants du fluide à traiter.

11. Module selon l'une des revendications 1 à 10, caractérisé en ce qu'il comporte un élément de traitement multicanal à membrane du type stérilisant, à surface hydrophobe, et dont le diamètre des pores est inférieur ou égal à 0,8 micromètre.

12. Module selon l'une des revendications 1 à 10, caractérisé en ce qu'il comporte un élément de traitement constitué d'un matériau poreux, portant à chaque extrémité un embout en matériau dense constitué d'un matériau de même nature que ledit élément, ledit embout étant lié par frettage à une virole en alliage choisi parmi les alliages riches en nickel, et ladite virole étant soudée audit carter en acier inoxydable dont l'intérieur est électropoli.

13. Module selon l'une des revendications 1 à 10, caractérisé en ce qu'il comporte un élément de traitement, choisi parmi le type nid d'abeille et le type multicanal, en matériau dense dont les parois sont revêtues d'un matériau catalytique.

## Patentansprüche

1. Modul zum Filtrieren, Trennen, Reinigen eines Fluids oder zur katalytischen Umwandlung,
- mit einer im wesentlichen zylindrischen Metallhülle (13), auch Gehäuse genannt,
- mit mindestens einem starren Behandlungselement (4) bestehend aus einem dichten oder porösen Material, das unter keramischen Materialien, Kohlenstoff, gesintertem Glas und einem gesinterten Metall ausgewählt wird, wobei mindestens eines der Enden (5) des Elements im wesentlichen zylindrisch ist und seine Achse parallel zu der der Hülle (13) verläuft,
- mit einem durch die Innenwand des Gehäuses und die Außenwand des Behandlungselements begrenzten Raum,
- mit mindestens einem Metallteil in Form eines Rings (6), der elastisch verformbar ist und einerseits am Gehäuse (13) sowie andererseits an dem Ende (5) des Elements (4) befestigt ist,
dadurch gekennzeichnet, daß die Verbindung zwischen dem Ring (6) und dem Ende (5) des Elements (4) durch thermisches oder mechanisches Aufspannen erfolgt und daß das Fluid in dem durch die Innenwand des Gehäuses und die Außenwand des Behandlungselements begrenzten Raum strömt.

2. Modul nach Anspruch 1, dadurch gekennzeichnet, daß der Ring auf dem Gehäuse durch eine Schweißnaht befestigt ist, die durch Einstecken des äußeren Rands des Rings in eine in die Wand des Gehäuses eingeschnittene Rinne und durch partielles Schmelzen der Dicke der Wand des Gehäuses und des äußeren Rands des Rings erzielt wird, ohne daß dabei eine Zone geschmolzenen Metalls an der Innenoberfläche des Gehäuses auftritt.

3. Modul nach Anspruch 1, dadurch gekennzeichnet, daß der Ring auf dem Gehäuse durch eine Schweißnaht befestigt wird, die durch Einstecken des äußeren Rands des Rings in eine in die Wand des Gehäuses eingeschnittene Rinne und durch partielles Schmelzen der Dicke der Wand des Gehäuses gebildet wird, wobei aber der äußere Rand des Rings nicht schmilzt, sondern durch Schrumpfen der geschmolzenen Zone eingeklemmt wird, und ohne daß eine Zone geschmolzenen Metalls an der Innenoberfläche des Gehäuses auftritt.

4. Modul nach einem der vorhergehenden Ansprüche, dadurch gekennzeichnet, daß der Ring eine radiale Einspannkraft auf eine im wesentlichen zylindrische Oberfläche des Elements ausübt, wobei die Größe dieser Kraft von der Breite der Oberfläche abhängt.

5. Modul nach einem der vorhergehenden Ansprüche, dadurch gekennzeichnet, daß die Verbindung zwischen dem Ring und dem Element keinerlei Relativbewegung des Rings bezüglich des Elements erlaubt.

6. Modul nach einem der vorhergehenden Ansprüche, dadurch gekennzeichnet, daß mindestens eines der Enden des Elements mit dem Ring über einen auf dem Element befestigten Ansatz verbunden ist, der im wesentlichen zylindrisch geformt ist und aus einem porösen oder dichten Material besteht.

7. Modul nach Anspruch 6, dadurch gekennzeichnet, daß der Ansatz mit dem Element über ein bei hoher Temperatur schmelzendes Glas verbunden ist.

8. Modul nach einem der vorhergehenden Ansprüche, dadurch gekennzeichnet, daß die Verbindung zwischen dem Ring und dem Element durch mechanisches Aufspannen von Morsekegeln erfolgt.

9. Modul nach einem der vorhergehenden Ansprüche, dadurch gekennzeichnet, daß der Ring aus einem Material hergestellt wird, das aus rostfreiem Stahl, einer Titanlegierung und einer an Nickel reichen Legierung ausgewählt wird.

10. Modul nach einem der vorhergehenden Ansprüche, dadurch gekennzeichnet, daß das Element Stoffe enthält, die mit bestimmten Bestandteilen des zu behandelnden Fluids chemisch reagieren können.

11. Modul nach einem der Ansprüche 1 bis 10, dadurch gekennzeichnet, daß er ein mehrere mit einer Membran versehene Kanäle enthaltendes Behandlungselement vom Sterilisiertyp mit wasserabweisender Oberfläche enthält, wobei der Durchmesser der Poren höchstens 0,8 µm beträgt.

12. Modul nach einem der Ansprüche 1 bis 10, dadurch gekennzeichnet, daß er ein Behandlungselement bestehend aus einem porösen Material enthält, das an jedem Ende einen Ansatz aus dichtem Material der gleichen Art wie das Element selbst trägt, wobei der Ansatz durch Einspannen mit einem Ring aus einer Legierung verbunden ist, die unter den an Nickel reichen Legierungen ausgewählt wird, und wobei der Ring am Gehäuse aus rostfreiem Stahl angeschweißt ist, dessen Innenseite elektropoliert ist.

13. Modul nach einem der Ansprüche 1 bis 10, dadurch gekennzeichnet, daß er ein Behandlungselement aufweist, das wabenförmig ist oder mehrere Kanäle enthält und aus einem dichten Material besteht, dessen Wände mit einem katalytischen Material beschichtet sind.

## Claims

1. A module for filtering, separating, purifying fluids, or for catalytic conversion, comprising:
- a substantially cylindrical metal envelope (13) or housing,
- at least one rigid treatment element (4) made from a dense or porous material selected from a ceramic, carbon, sintered glass and sintered metal, of which at least one of the ends (5) is substantially cylindrical and whose axis is parallel to that of the envelope (13),
- a volume limited by the inner wall of said housing and the outer wall of said treatment element,
- at least one metal part in the form of an elastically deformable ring (6), fixed firstly to the housing (13) and connected secondly to said end (5) of said element (4),
the module being characterized in that the joint between said ring (6) and said end (5) of said element (4) is a thermal or mechanical interference fit, and in that said fluid circulates in said volume limited by the inner wall of the housing and the outer wall of the treatment element.

2. A module according to claim 1, characterized in that said ring is fixed to said housing by welding effected by fitting the outer edge of said ring in a machined seat in the wall of said housing and by partial fusion of the thickness of the wall of said housing and of the outer edge of said ring, without a region of fused metal appearing at the inner surface of said housing.

3. A module according to claim 1, characterized in that said ring is fixed to said housing by welding effected by fitting the outer edge of said ring in a machined seat in the wall of said housing and by partial fusion of the thickness of the wall of said housing, without fusion of the outer edge of said ring but with gripping of said edge by contraction of the fused region, and without a region of fused metal appearing at the inner surface of said housing.

4. A module according to any preceding claim, characterized in that said ring exerts a radial clamping force on a substantially cylindrical surface of said element, the magnitude of said force being related to the width of said surface.

5. A module according to any preceding claim, characterized in that the connection between said ring and said element does not allow said ring to move relative to said element.

6. A module according to any preceding claim, characterized in that at least one of the ends of said element is connected to said ring through a connecting piece fixed to said element, said connecting piece being of substantially cylindrical shape and made from a material selected from a porous material and a dense material.

7. A module according to claim 6, characterized in that said connecting piece is connected to said element by a glass which is fusible at a high temperature.

8. A module according to any preceding claim, characterized in that the connection between said ring and said element is effected by mechanical interference fit of Morse tapers.

9. A module according to any preceding claim, characterized in that said ring is made from a material selected from a stainless steel, a titanium alloy, and a nickel-rich alloy.

10. A module according to any preceding claim, characterized in that said element contains components which can react chemically with some constituents of the fluid to be treated.

11. A module according to any one of claims 1 to 10, characterized in that it comprises a multi-channel treatment element with a membrane of sterilizing type, with a hydrophobic surface and having a pore diameter less than or equal to 0.8 micrometers.

12. A module according to any one of claims 1 to 10, characterized in that it comprises a treatment element formed from a porous material, carrying a connecting piece at each end of dense material of the same nature as said element, said connecting piece being connected by interference fit to a ring of an alloy selected from nickel-rich alloys, and said ring being welded to said housing of stainless steel, the interior of which is electro-polished.

13. A module according to any one of claims 1 to 10, characterized in that it comprises a treatment element selected from the honeycomb type and the multi-channel type, of a dense material whose walls are coated with a catalytic material.
